# EUROPEAN PATENT APPLICATION

(11) **EP 4 843 832 A1**
(43) Date of publication of application: **25.11.2026**
(21) Application number: 25178490.6
(22) Date of filing: 23.05.2025
(51) Int. Cl.: B60R 9/055, B60P 7/06

(54) **INFLATABLE VEHICLE CARGO CARRIER WITH ENGINEERED BENDS**

(71) Applicant: Flated LLC, San Marcos, CA 92078 (US)
(72) Inventor: WATTS, Daniel, Carlsbad (US); TENHOEVE, Kenneth, Gypsum (US); GUAY, Ryan, Boulder (US)
(74) Representative: Patentanwälte Olbricht Buchhold Keulertz

(57) **Abstract**

An inflatable cargo carrier has a base, a top including a top panel of drop-stitch material, and a rear support including a rear support panel of drop-stitch material connecting the base and the top panel. A front section including a front section panel of drop-stitch material connects the base and the top panel. Characterized in an engineered bend between and has an air-tight connection between the rear support panel and the top panel. A different engineered bend is between and has an air-tight connection between the top panel and the front section panel. The top, rear support, and front section panels form a continuous structure when inflated. The base includes structure for attaching to a vehicle roof.

## Description

### NOTICE OF COPYRIGHTS AND TRADE DRESS

A portion of the disclosure of this patent document contains material which is subject to copyright protection. This patent document may show and/or describe matter which is or may become trade dress of the owner. The copyright and trade dress owner has no objection to the facsimile reproduction by anyone of the patent disclosure as it appears in the Patent and Trademark Office patent files or records, but otherwise reserves all copyright and trade dress rights whatsoever.

### BACKGROUND

### Field

This disclosure relates to vehicle accessories, such as cargo carriers.

### Description of the Related Art

One class of vehicle accessories are cargo carriers that attach to the outside of a vehicle, usually to the roof of a vehicle. One type, a vehicle cargo carrier, attaches to vehicles to let people carry luggage, skis, camping gear and other items. Some use them for travel to airports, train stations or cruise terminals when their vehicle trunk is not large enough to carry all needed luggage. Large carriers can hold over 20 ft³ (≈0.57 m³) (metric equivalents are approximated). Others may need one for camping trips to carry a tent and other camping gear.

Storage of a carrier can be an issue when the carrier is off the vehicle and not in use. Most are made of rigid plastic, fiberglass, or metal, which retain their shapes when not in use and occupy space in the user's garage, shed or elsewhere.

Mounting a cargo carrier to the vehicle is another issue. Some vehicles, especially SUVs have roof racks to support and secure loads. But many vehicles have no roof rack. Attaching a carrier to a roof without a rack is risky and potentially dangerous. Some people may try holding a carrier to the roof with ropes passing through the vehicle windows, but the load shifts easily, which can scratch the roof or even let the carrier fly off the roof especially at high speed.

### DESCRIPTION OF THE DRAWINGS

Fig. 1 is a is a perspective view of a panel of drop-stitch material of a cargo carrier with engineered bends.
Fig. 2 is an end view of a panel of drop-stitch material of a cargo carrier with engineered bends.
Fig. 3A is a sectional view of a valve in a panel of drop-stitch material of a cargo carrier with engineered bends.
Fig. 3B is a sectional view of the valve of Fig. 3A.
Fig. 3C is a top view of the valve of Fig. 3A.
Fig. 4A is a sectional view of an engineered bend in a panel or between two panels of drop-stitch material of a cargo carrier with engineered bends.
Fig. 4B is a sectional view of an engineered bend in a panel or between two panels of drop-stitch material of a cargo carrier with engineered bends.
Fig. 5 is a side perspective of a cargo carrier with engineered bends.
Fig. 6 is a side view showing a cargo carrier with engineered bends on a vehicle roof.
Fig. 7 is a plan view showing a carrier with engineered bends on a vehicle roof.
Fig. 8 is a is a bottom view of a carrier with engineered bends.
Fig. 9A is a side view showing a cargo carrier with engineered bends and a closed window in a sidewall.
Fig. 9B is the side view of Fig. 9A showing an open window in a sidewall.
Fig. 10A is a plan view showing a cargo carrier with vertical engineered bends.
Fig. 10B is a rear view of Fig. 10A showing the vertical engineered bends.
Fig. 10C is a front view of Fig. 10A showing the vertical engineered bends.
Fig. 11 is a side view showing a cargo carrier with two horizontal engineered bends between a top and a front wall.
Fig. 12 is a flow diagram showing a process for forming an inflatable device for attaching to a vehicle roof.

Throughout this description, elements appearing in figures are assigned three-digit or four-digit reference designators, where the two least significant digits are specific to the element and the one or two most significant digits may be the figure number where the element is first introduced or fabricated. An element that is not described in conjunction with a figure may be presumed to have the same characteristics and function as a previously-described or subsequently-described element having the same reference designator.

### DETAILED DESCRIPTION

### Description of Apparatus

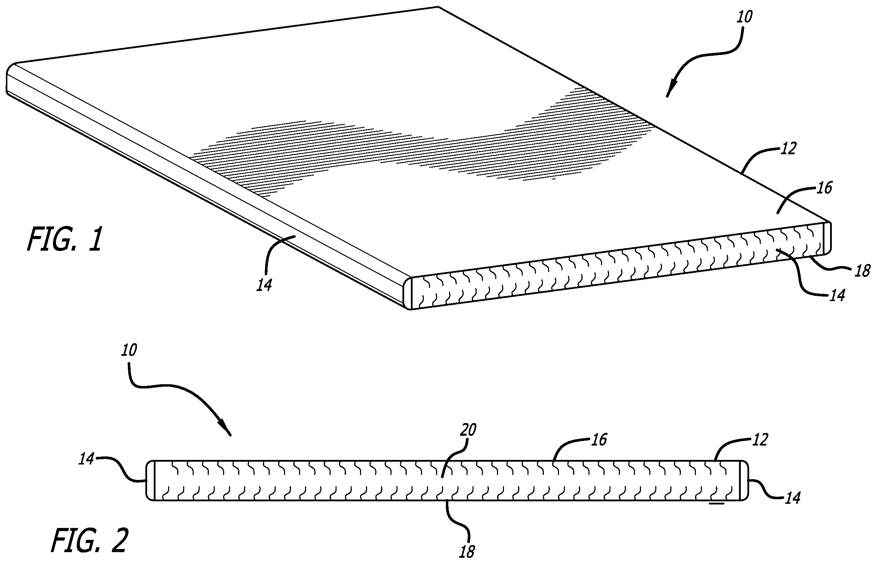

Fig. 1 shows a perspective view of panel 10 of drop-stitch material 12 of a cargo carrier with engineered bends (e.g., see carrier 60). Fig. 2 shows an end and cross-sectional view of panel 10 of drop-stitch material 12 of a cargo carrier with engineered bends. Panel 10 and/or material 12 includes two pieces of polyester top and bottom surfaces 16 and 18 joined by woven support fabric having thousands of fine, flexible polyester threads 20 attached to and attaching the two surfaces 16 and 18 together into a strong unit or panel 10. Panel 10 and/or material 12 may include an outer surface 16 and a spaced inner surface 18 connected by fine, flexible plastic thread. Panel 10 also has side surfaces 14 joining the top and bottom surfaces 16 and 18. Surfaces 14 may be or be attached to surfaces 16 and 18 with a PVC tape or other air tight material or stitch so the panel 10 is airtight at high pressures, such as up to pressures of 20, 30 or 40 pounds per square inch (psi). The pressure may be measured by an air pump or pressure meter, such as a tire, bicycle or sports ball pump or pressure meter. It may be measured by a hand air pump or electrical air pump meter. Surface 16, surface 18, and/or panel 10 is flat or planar due to its inflated, drop-stitch fabric.

Material 12 is a drop-stitch material having top surface 16, bottom surface 18 and threads of material attached to and extending between the top and bottom surfaces 16 and 18. Each or all the threads have equal length so that top and bottom surfaces 16 and 18 are parallel to each other when formed. Material 12 may be constructed by intertwining thousands of fine polyester threads tightly between two external layers of material (e.g., the top and bottom surfaces 16 and 18), this fabric, tightens the threads, resulting in a robust surface. Using drop stitch material 12 enables inflation of carrier panels 10 and engineered bends to higher pressures, imparting a superior level of rigidity compared to standard inflatables.

Material 12 may be or include a textile product composed of two layers of woven fabric, as top and bottom surfaces 16 and 18, connected by threads, called drop yarns or drop stitch threads. When the fabric layers are coated with an airtight material, typically TPU or PVC, the structure becomes inflatable and capable of holding its shape under pressure. The inflated pockets created by the drop yarns give the fabric structural rigidity, enabling the creation of flat-sided, pressure-resistant structures of top and bottom surfaces 16 and 18. Material 12 may include a warp knit (tricot) drop stitch material, and/or a woven drop stitch material.

An air-tight coating may be applied to the outer surfaces of both sides of the material 12; and/or surfaces 14, 16 and 18. The surfaces 14, 16 and 18 of the panel may be made of polyester base fabric coated on both sides. Polyester thread may be used throughout the drop stitch material because it is strong, durable and has little stretch. The resulting panel of material can be inflated to pressures of 20 psi (≈138 kPa).

The top surface, side surfaces 14 and/or outer surfaces of the panel or carrier may have a surface coating to resist the sun, avoid sipping or falls or for other reasons.

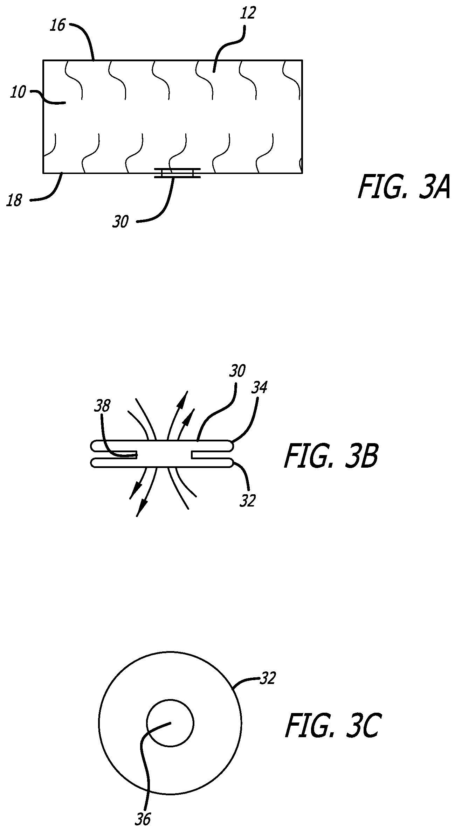

Fig. 3A is a sectional view of a valve 30 in, through or on a panel 10 of drop-stitch material 12 of a cargo carrier with engineered bends. Fig. 3B is a sectional view of the valve 30. Fig. 3C is a top view of the valve 30. Figs. 3A - 3C show valve 30 of panel 10. Valve includes a top flange 34 and a bottom flange 32 on ring 38. The ring has an opening 36 through it. The opening may be or have a releasable valve seal than can be opened and closed by the user such as by pushing and pulling a plug of the seal, twisting the seal, screwing and unscrewing a cap onto the seal, and/or inserting a device or funnel into the seal. The valve is attached to and extends through the bottom surface 18 of the panel 10. An outer surface of valve 30, or ring 38 may be attached to surface 16 or 18 with an air tight seal, such as to maintain high pressure within panel 10 and/or carrier 60. When inflating panel 10 through valve 30, the valve lets the pressurized air fill the panel 10 and other panel 10 in fluid or gas communication with panel 10, such as to inflate all panels 10 of carrier 60 simultaneously to high pressure. To deflate the platform, a user opens the valve 30, and the panel 10 and other panels 10 of the carrier 60 deflate simultaneously. Panel 10 and/or carrier 60 may have only one valve 30 or more than one (e.g., two) valve 30.

Valve 30 may be an airtight valve to inflate and deflate panel 10 and/or carrier 60. After inflation, valve 30 may hold high pressure air in the panel and/or carrier.

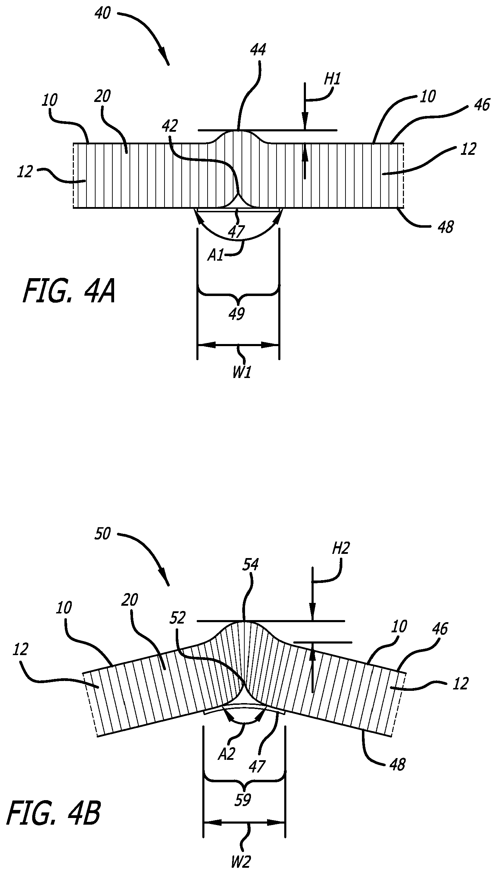

Fig. 4A is a sectional view of an engineered bend 40 in a panel 10 or between two panels 10 of drop-stitch material 12 of a cargo carrier with engineered bends. Bend 40 may be an engineered bend 40 in a panel 10 that divides that panel into two panels 10. Bend 40 may be an engineered bend 40 between two panels 10.

Engineered bend 40 includes an air-tight communication 45 to inflate or to deflate any two panels 10. The communication 45 maybe or include a gas open space or opening between and to adjacent panels 10. The communication 45 may be between and capable of allowing simultaneous inflation or deflation of the panels 10 in communication 45 though the panels 10 attached together by engineered bend 40.

Engineered bend 40 includes an engineered pinch 42 on a bottom surface 48 of the engineered bend 40. Pinch 42 may be a partial fold of bottom surface 48 which may be surface 18 of a panel 10, a first side or an inside surface of the engineered bend 40. Pinch 42 may be formed by a tape 47 on and pinching together the surface 48. Pinch 42 may be formed by or because of adhering tape 47 to surface 48. It may be formed and maintained by pinching surface 48 and/or applying tape 47 over pinch 42. Tape 47 may be an adhesive tape such as a polyvinyl chloride (PVC) tape. It may be a material adhered to or glued to surface 48.

Engineered bend 40 includes an engineered bulge 44 on a top surface 46 of the engineered bend 40. Bulge 44 may be a bump on a top surface 46 which may be surface 16 of a panel 10, a second side, opposite side, or an outside surface of the engineered bend 40. Bulge 44 may be formed by or because of pinch 42 and/or tape 47. It may be formed by pinching and/or taping pinch 42.

Engineered bend 40 causes - a "pinching" 42 of the drop stitch material 12 bottom surface 48 that creates less surface area of that surface than surface area on top surface 46 which causes the whole drop stitch structure of panel or panels 10 to bend to an angle A1 which may be less than 180 degrees and less than flat when the material 12 of panel(s) 10 are inflated.

Bend 40 may be formed by or of laminating tape 47 (e.g., a PVC tape strip) and measured lines 49 on an inside surface of a drop-stitch material 12, and formed with a bent/bugle 44 on an outside surface of an opposing side of the drop stitch material 12. Tape 47 may be applied by locating then laminating the tape 47 using heat to bond a heat activated laminating surface of the tape 47 to the surface 48 of the material 12 as shown in FIG. 4a. Tape 47 may be applied by locating then pressing the tape strip 47 by hand or machine with sufficient force to make an adhesive surface of the tape stick to the surface 48 of the material 12 as shown in FIG. 4a. The measured lines 49 may be a width W1 of surface 48 that is pinched between two lines that are the left and right edges shown of the tape 47 that creates a bend in the material due to the surface material 12 being shorter on one side or surface 48. Pinching may be or include pulling together a length of surface 48 by bending panel 10 or pulling together locations of surface 48 at the ends of width W2 or at pinch 52. Lines 49 may be a measure of how much will be pinched together as pinch 42 an area width W1 of the bottom surface 48 of the material 12 to create the desired bend angle A1.

When panel(s) 10 or bend 40 is inflated above 10 or 15 (and up to 20 or 50) pounds per square inch (PSI), the amount of bend angle A1 is made by the amount of pinched drop stitch surface 48 material, such as the amount of measured lines 49 of or on the surface 48. The amount of bend angle A1 may be decreased by increasing the amount of pinched drop stitch surface 48 material on the surface 48.

When panel(s) 10 or bend 40 is inflated above 10 or 15 (and up to 20 or 50) pounds per square inch (PSI), the amount of height H1 of bulge 44 may be made by the amount of pinched drop stitch surface 48 material, such as the amount of measured lines 49 of or on the surface 48. The height H1 of bulge 44 may be increased by increasing the amount of pinched drop stitch surface 48 material on the surface 48.

Tape 47 may be a PVC or other tape that is a flexible, durable tape made from polyvinyl chloride (PVC) that's coated with adhesive. It may be used for many purposes including electrical insulation to create airtight seals on PVC fitting covers and joints, packaging such as used for heavy-duty shipments like large parts or bulky supplies, and bonding such as used to bond wood, metals, glass, papers, paints, and many plastics and fabrics. Types of PVC tape considered include PVC electrical tape, PVC packing tape, PVC pipe wrap tape, and PVC bonding tape.

Fig. 4B is a sectional view of an engineered bend 50 in a panel 10 or between two of panels 10 of drop-stitch material 12 of a cargo carrier with engineered bends. In the example of Fig. 4A, angle A1 is closer to 180 degrees than the angel A2 in Fig. 4B. For example, width W2 is less than width W1, pinch 52 is greater than pinch 42, height H2 is greater than height H1 and angle A2 is less than angle A1.

Engineered bend 50 includes an engineered pinch 52 on the bottom surface 48 of the engineered bend 50. Pinch 52 is like pinch 42 but is a larger pinch.

Engineered bend 50 includes an engineered bulge 54 on a top surface 46 of the engineered bend 50. Bulge 54 is like bulge 44 but is a larger bulge.

Engineered bend 50 causes - a "pinching" 52 of the drop stitch material 12 bottom surface 48 that creates less surface area of that surface than surface area on top surface 46 which causes the whole drop stitch structure of panel or panels 10 to bend to an angle A2 which is than 180 degrees and less than angle A1 when the material 12 of panel(s) 10 are inflated.

Bend 50 may be formed by or of laminating tape 47 (e.g., a PVC tape strip) and measured lines 59 with a bent/bugle 54 and a width W2 of surface 48 that is pinched between two lines that are the left and right edges shown of the tape 47. Tape 47 may be applied by locating then laminating the tape 47 using heat to bond a heat activated laminating surface of the tape 47 to the surface 48 of the material 12 as shown in FIG. 4b. Tape 47 may be applied by locating then pressing the tape strip 47 by hand or machine with sufficient force to make an adhesive surface of the tape stick to the surface 48 of the material 12 as shown in FIG. 4b. The measured lines 49 may be a width W2 of surface 48 that is pinched between two lines that are the left and right edges shown of the tape 47 that creates a bend in the material due to the surface material 12 being shorter on one side or surface 48. Pinching may be or include pulling together a length of surface 48 by bending panel 10 or pulling together locations of surface 48 at the ends of width W2 or at pinch 52. Lines 59 may be a measure of how much will be pinched together as pinch 52 an area width W2 of the bottom surface 48 of the material 12 to create the desired bend angle A2.

When panel(s) 10 or bend 50 is inflated above 5 to 8 pounds per square inch (PSI) (and up to 10 or 20 PSI), the amount of bend angle A2 is made by the amount of pinched drop stitch surface 48 material, as the amount of measured lines 49 such as noted for angle A1. This may be when panel(s) 10 or bend 50 is inflated above 5 or 8 PSI.

When panel(s) 10 or bend 50 is inflated above 5 to 8 PSI (and up to 10 or 20 PSI), the amount of height H2 of bulge 54 may be made by the amount of pinched drop stitch surface 48 material, such as the amount of measured lines 49 such as noted for heigh H1. This may be when panel(s) 10 or bend 50 is inflated above 5 or 8 PSI.

The engineered bend 40 or 50, folds, or pinches 42 or 52 may be on the inside or bottom surface 48 of the panel 10, which give the bend or bent panel 10 the 3-D shape without revealing to the outside or top surface 46 of the carrier the tape that is over the pinch 42 or 52 to create the engineered bend. The pinch 42 or 52, and/or tape 47 forces the bottom surface 48 of material 12 to pull to the center of angle A1 or A2 and create the bend angle A1 or A2 at bend 40 or 50.

The engineered fold or pinch 42 or 52 may be applied to the inside or bottom surface 48 with a tape strip across and pinching the measured lines 49 on the bottom surface 48. The pinching of the bottom surface 48 creates less left to right shown surface area on that surface, which causes the whole panel 10 to bend at angle A1 or A2. The amount of the bend angel A1 or A2 is caused by the amount of measure lines 49 or area of bottom surface 48 pinched under the tape 47.

Sometimes, another material, pinching device, attachment, adhesive or pinching method may be used other than tape, such as epoxy, clamps, grips, or other structure capable of maintaining a grip on two areas of the surface 48 for a term of weeks, months, or years.

Engineered bend 40 may have a bend angle A1 between 180 and 80 degrees. Engineered bend 50 may have a bend angle A2 between 170 and 10 degrees.

Sometimes, Fig. 4A is a side cross-sectional view showing an engineered bend of a panel of drop-stitch material of a cargo carrier cargo carrier before inflation of the panel(s) 10 and/or a carrier 60 having panel(s) 10 inflated to below 2, 5 or 10 psi. In these cases, Fig. 4B is a side cross-sectional view showing an engineered bend of a panel of drop-stitch material of a cargo carrier cargo carrier after or during inflation of the panel(s) 10 and/or a carrier 60 having panel(s) 10 inflated to above 15 or 20 psi.

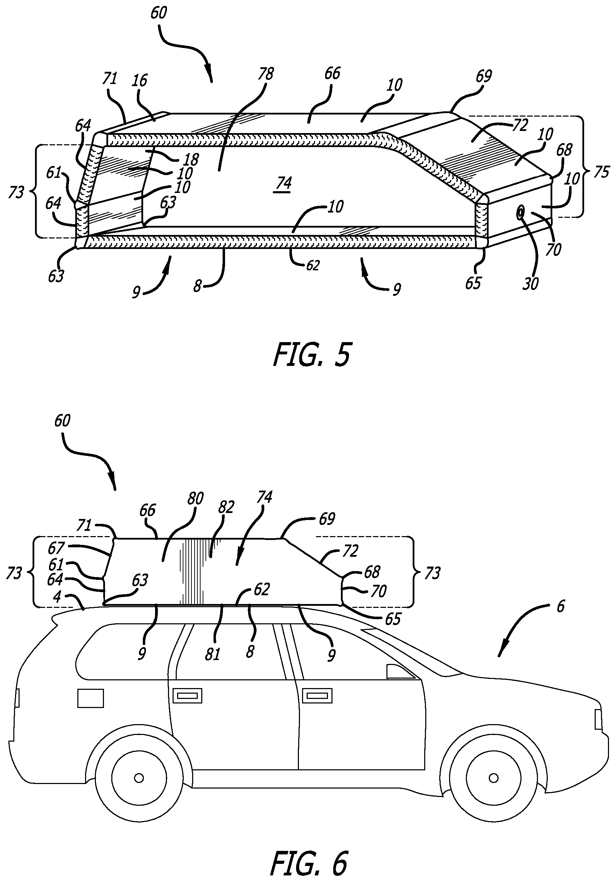

Fig. 5 is a side perspective of a cargo carrier 60 with engineered bends, such as bends 40 and/or 50. Fig. 5 does not show the sidewalls 80 and 82 of Figs. 6-10. Each of base 62, rear support 64, rear support 67, top 66, front section 72 and front section 70 may include a panel 10 of material 12 extending from one to another engineered bend 40 or 50. Carrier 60 includes drop-stitch material panels 10 that are fluid-tight and air-tight panels that may be coupled or directly attached on one or both ends to one of engineered bend 40 or 50. Each of engineered bends 63, 61, 71, 69, 68 and 65 are one of air-tight bend 40 or 50 that are coupled or directly attached on both ends to panels 10 of the carrier 60.

The panel 10 of (or that is) base 62 is coupled on one end (e.g., each is coupled through another structure or directly connected to an immediately adjacent panel) through bend 63 to an end of the panel 10 of rear support 64. The panel 10 of base 62 is coupled on a second end through bend 65 to an end of the panel 10 of front section 70. The panel 10 of rear support 67 is coupled on one end through bend 61 to an end of the panel 10 of rear support 64. The panel 10 of rear support 64 is coupled on a second end through bend 71 to an end of the panel 10 of top 66. The panel 10 of front section 72 is coupled on one end through bend 69 to an end of the panel 10 of top 66. The panel 10 of front section 72 is coupled on a second end through bend 68 to an end of the panel 10 of front section 70. Each coupling creates a fluid-tight and air-tight connection between and including the first panel 10 (e.g., of base 62), the intermediate engineered bend (e.g., bend 63) and the second panel (e.g., of rear support 64).

Sometimes, only any two, three, four or five of base 62, rear support 64, rear support 67, top 66, front section 72 and front section 70 is a panel 10 of material 12. If one is not a panel 10, there is no engineered bend at either end.

Sometimes, only any two, three, four or five of engineered bends 63, 61, 71, 69, 68 and 65 exists between two panels 10 of material 12. If an engineered bend is not present, there still may be a panel 10 at one or both ends where the bend is not present. The ends of the panels or panels 10 may be fluid and air sealed such as by stitching, tape (e.g., PVC tape), a plastic panel and/or other suitable structure.

When panels 10 of carrier 60 are inflated, they create internal space 74. When panels 10 are uninflated or deflated, they remove internal space so carrier can be folded into a much smaller device, such as only including the space of the panels and sides, and stored. Space 74 may be accessed through opening 78 which may be covered by sidewall 80 and/or 82.

Each engineered bend 63, 61, 71, 69, 68 and 65 is or includes an air-tight communication to inflate and to deflate any two or more (e.g., of panels 10) of the base 62, the rear support 73, the top 66 and the front section 75 having panels 10. This communication may be as is described for bends 40 and 50. The communication may include a gas open space or opening between and to adjacent panels 10 of carrier 60. The communication may be between and capable of allowing simultaneous inflation or deflation of all the panels 10 of carrier 60 in communication though all the panels 10 attached together by engineered bends. These panels 10 may be or be part of any two or more bases, the rear support, the top, and the front section.

The inside has threads 20 of the drop-stitch material 12 of panels 10 of the base, rear wall, front wall, and top part panels connect to each other through fluid and/or gas open-engineered bends to balance the air pressure within the drop-stitch material panels 10 of the carrier 60. There may be at least one and possibly more engineered bends between at least two and possibly more of the drop-stitch material panels 10. The cargo carrier 60 may be formed of one piece of drop-stitch material 12 bent to desired angles at the engineered bends to form panels 10 of a single gas connected drop-stitch material panel. The one piece may be connected together at one non-engineered bend, seam across a direction of and replacing one engineered-bend of the carrier.

The panels 10 and engineered bends of carrier 60 can include side edges (not shown but towards and away from the sectional views of Figs. 4-6) of drop-stitch material or have tape such as PVC tape on the side edges of the drop-stitch material that cause the edges and panels to be airtight at high pressures. This can form rigid structures of the carrier 60 when inflated. After use, a person can deflate the cargo carrier 60 through a high-pressure valve 30 and roll or fold it so it can fit into a bag or other container that can be stored in small spaces and carried when needed.

The engineered bends of carrier 60 may have various bend angles (e.g., angle A1 or A2) such as between 180 and 0 degrees. Bend angles may be between 120 and 70 degrees for bend 63, between 180 and 150 degrees for bend 61, and between 130 and 60 degrees for bend 71, between 180 and 90 degrees for bend 69, between 180 and 90 degrees for bend 68, and between 120 and 70 degrees for bend 65.

For some embodiments, the engineered bend can be created by cutting a length section out of one side of panel 10 (e.g., surface 48 between left and right edges of tape 47) and laminating the PVC tape over the cut out to make surface 48 with the tape 47 air tight. This accomplishes the same bend but may not look as nice as the bends of Fig. 4 because it removes the internal stitches from the bottom side (e.g., surface 48) where the section of material was removed from that side. This embodiment is still very effective to make bends for the carrier 60.

Fig. 6 is a side view showing a carrier 60 with engineered bends on a vehicle roof 4. Cargo carrier 60 is formed of or includes inflatable drop-stitch material panels 10 and engineered bends 63, 61, 71, 69, 68 and 65. This design forms a cargo carrier 60 having one or more panels 10 made of drop-stitch material 12 as or as part of each or at least 3 of rear wall 73 (e.g., rear supports 64 and 67), top 66, base 62, and front wall 75 (e.g., front sections 70 and 72).

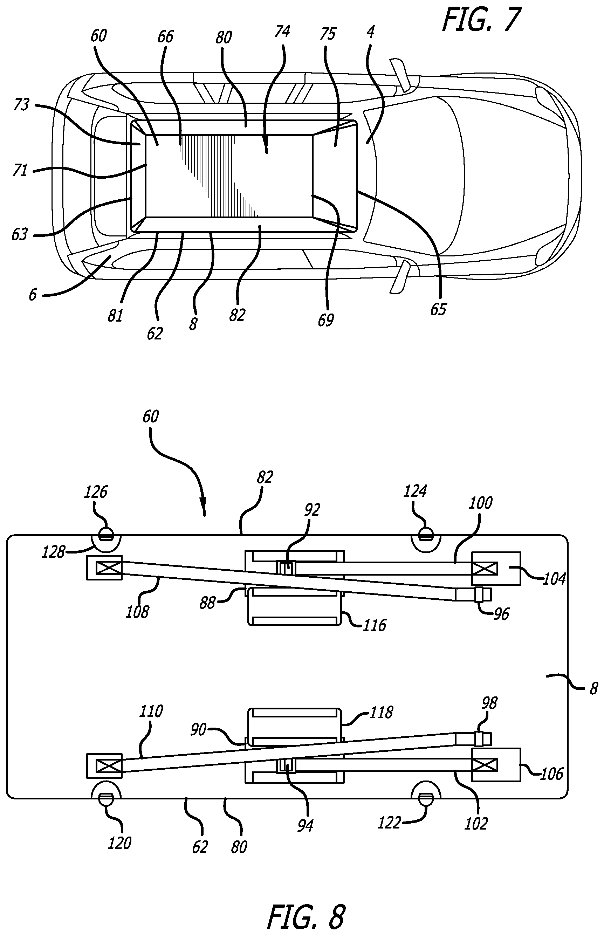

Fig. 6 shows flexible sidewall 82 attached to the carrier between base 62, rear wall 73, top 66 and front wall 75. A sidewall 80 is on the other side of the carrier but not shown in Fig, 6 but is shown in Fig. 7. There may be an engineered bend 40 or 50 where the drop-stitch material 12 and/or panels 10 change direction such at the intersection of the base 62 and rear support 64 extending from inside of the carrier (e.g., surface 18) to outside of the carrier (e.g., surface 16).

The carrier 60 can mount on the roof 4 of a vehicle 6 such as a car, camper, truck, topper, sport utility vehicle (SUV), recreational vehicle (RV) and the like. The vehicle may be gas powered, electrically powered, human powered and/or powered by other means. Tie-downs or other known attachments, with or without intermediary or intermittent structure between the carrier 60 and the roof 4, can secure the carrier 60 to the roof 4. The carrier can also be removed from the roof and mounted on the ground, another structure, a platform, the ground, or a building floor. The carrier extends to or less than to the back edge, side edges and front edge of roof 4. In other cases, the carrier can extend beyond one or more of the back edge, side edges and front edge of roof 4, such as to accommodate more cargo, objects or a larger person within the carrier. Carrier 60 provides central storage space or internal space 74 for objects such as luggage, camping equipment, surfboards, snowboards, skis, other equipment, or people.

Valves like valves 30 in Figs. 3A - 3C may be on any one or more panels 10 that are or are included in base 62, rear wall 73 (e.g., rear supports 64 and 67), top 66 and front wall 75 (e.g., front sections 70 and 72). In Figs. 5 and 6, valve 30 is shown on the outside surface of a panel of front section 70 but may be on any drop-stitch material panel 10 of the carrier 60. For example, valve 30 could be mounted on a panel 10 of rear wall 73 or base 62. The valve 30 may be mounted on an inside surface of a panel 10 such as mounted on an inside of a panel 10 facing space 74. Only one valve 30 may be mounted on a panel 10 of carrier 60 due to the engineered bends creating an open air space between the panels 10 of the carrier. In other cases, there may be two or three valves 30 in two or three panels 10. More than one valve 30 may be beneficial to provide a backup valve if one is damaged.

Instead of having rigid solid plastic, fiberglass or metal walls, which can be heavy and cumbersome, carrier 60 is a vehicle cargo carrier that uses drop-stitch material 12 inflatable panels 10 as or as part of a base 62; rear supports 64 and 67; top 66; and front sections 70 and 72; and engineered bends between the inflatable panels. Engineered bend 63 is between (or in one of) panel 10 of base 62 and rear support 64. Engineered bend 61 is between (or in one of) panel 10 of rear supports 64 and 67. Engineered bend 71 is between (or in one of) panel 10 of rear support 67 and top 66. Engineered bend 69 is between (or in one of) panel 10 of top 66 and front section 72. Engineered bend 68 is between (or in one of) panel 10 of front sections 70 and 72. Engineered bend 65 is between (or in one of) panel 10 of front section 70 and base 62. Internal space 74 is between base 62; rear supports 64 and 67; top 66; and front sections 70 and 72. It may also be between sidewalls 80 and 82.

Drop-stitch material 10 and the engineered bends (e.g., 40 or 50) let carrier 60 be inflated by a person or user to through a high pressure valve 30, hold the high pressure and hold the form of the carrier. Tape such as PVC tape on the edges of the drop-stitch material 12 of panels 10 where the engineered bends do not exist cause the panels 10 to be airtight at high pressures, such as between 15 and 40 psi. This can form the inflated rigid structure or carrier 60. After use, a person can deflate the vehicle cargo carrier 60 through a high-pressure valve 30 and roll or fold it so it can fit into a bag or other container that may be less than half the volume of the inflated device and that can be stored in small spaces and carried by a person when its movement is needed. In some cases, when deflated carrier 60 it is less than one third the volume of it when inflated. When deflated, it also can be shipped easily, even as checked airplane luggage. The carrier can be inflated and the pressure determined using manual or electric pumps, such as for car tires, bike tires, inflatable mattresses, or sports balls. It can be deflated with similar pumps.

The cargo carrier may be one piece of drop-stitch material that is bent to the angle shown in the drawings at the engineered bends 63, 61, 71, 69, 68 and 65. Sometimes, one of the bends may not exist, such as where a piece of drop-stitch material has two ends and those ends replace one of the bends, such as by being air sealed off and attached together at the location of that bend, but not having an air flowing through from one to the other end. The panels 10 and valve 30 form an airtight structure, such as a structure able to hold an air pressure between 15 and 40 PSI for 48 hours to a few weeks or months. This pressure may be measured by a standard PSI meter such as on a tire pump, a soccer ball pump, or a pressure monitor for reliably measuring a pressure of between 10 and 45 psi.

Carrier 60 may be in a shape like hard carriers. Carrier 60 may be formed with a flat or shaped base 62 for attaching to a vehicle 6 luggage rack; or roof 4, such as a flat base 62 for attaching to a flat roof or a shaped base 62 for attaching to a shaped (e.g., non-flat) roof. The top portion 66 is spaced from the base 62. A rear wall 73 (e.g., rear supports 64 and 67)connects the rear of top 66 and base 62; and an angled, aerodynamic front wall 75 (e.g., front sections 70 and 72) connects the front of the top 66 and base 62. The top portion, base, rear wall, and front wall may each be or include at least one panel 10 of, formed by or including the inflatable drop-stitch material 12.

The inside of the drop-stitch material 12 of one or all pairs of panels 10 of the base, rear wall, front wall, and top portion connect to each other through gas open engineered bends 40 or 50 to balance the air pressure within the drop-stitch material panels 10 of the carrier 60. There are at least one and possibly more engineered bends 40 and/or 50 between at least two and possibly more of the drop-stitch material panels 10. The cargo carrier 60 may be formed of one piece of drop-stitch material that is bent to desired angles at the engineered bends to form panels 10 of a single gas-connected drop-stitch material panel. The one piece may be connected at one non-engineered bend, seam across a direction of and replacing one engineered-bend of the carrier. The drop-stitch material panels 10 and engineered bends 40 and 50 let the air be removed so the entire carrier 60 can be deflated and rolled up for easier and smaller storage when not inflated or in use.

The drop-stitch material panels 10 and engineered bends 40 and/or 50 may be or include a material that has or maintains a gas at a consistent non-changing pressure for days, weeks or months. They may be or include a material that seals the carrier panels 10 and edges of the drop-stitch material 12 so any one, two or they all are airtight at high pressures, such as together at the same panelized pressure of between 15 and 35 psi. This panelized pressure may be maintained between one or more panels, intersections, or other structures. For example, this panelized pressure may be maintained at (or between) any one, any two, three or all the panels 10 and bends 40 and/or 50 noted above based on the pressure being input to, pumped into or existing at any one of the panels 10 of carrier 60.

If there is no engineered bend where the drop-stitch material panels 10 have a bend that changes direction such at the intersection of the base 62 and rear support 64, reinforcing tape, such as tape 47 may be applied to the bottom and/or top surfaces 18 and 16 of the panels 10 where they join. This taped joint and the bends 40 and/or 50 are enough for structural integrity and strength where the drop-stitch material changes direction such at the intersection of the base 62 and rear support 64 inside the carrier and at the outside of the carrier, or at any other intersection of the carrier.

Fig. 7 is a plan view showing a carrier 60 with engineered bends 40 and/or 50 on a vehicle roof 4. The cargo carrier 60 has sidewalls 80 and 82 that may be or include a flexible material such as canvas to enclose or cover the internal space 74 of and/or openings 78 on each side of the carrier. Harder or rigid material may be used in place of or as part of the flexible material for the sidewalls.

Appropriate fasteners secure the sidewall material to the other structure of carrier 60. Fasteners such as straps, clips, Velcro^{®}, zippers, magnets or similar fasteners may connect to the sides of the top 66, rear wall 73, base 62 and/or front wall 75 of the carrier (e.g., shown in Fig. 5) to sidewalls 80 and 82. Releasing fasteners allows access into space 74 of the carrier for carrying luggage, camping equipment, surfboards, snowboards, skis, and other equipment. The sidewalls 80 and 82 may be directly attached to one or more bases, the rear supports, the top and/or the front sections, such as to side surfaces or sides of those. Sometimes, the sidewalls may be indirectly attached to one or more of the base, the rear supports, the top and/or the front sections through an intermediate structure such as a hardened frame or flexible buffer structure in turn attached to one or more of the base, the rear support, the top and/or the front section.

Sometimes, Fig. 7 shows rear supports 64 and 67 where support 64 is below support 67 and is not shown; and section 70 is below section 72 and is not shown. In other cases, rear supports 64 and 67 are a single rear support of rear wall 73 and there is no bend 61, such as where a single rear support exists between base 62 and top 66. This single rear support may be vertical. Sometimes, front sections 70 and 72 are a single front section of front wall 75 and there is no bend 68, such as where a single front section exists between top 66 and base 62. This single front section may be vertical or may be slanted upwards or downwards to reduce air friction during driving.

One of the sidewalls 80 or 82 may be made rigid by using inflatable drop-stitch material panel 10. Here, there may be an engineered bend 81 between wall 80 or wall 82, and any one or more of base 62, support 64, top 66 and/or section 68. As an example, engineered bend 81 is shown in Fig. 6 between wall 82 and base 62. The walls 80 and 82 may be made flexible by using materials such as canvas, plastic, or another flexible material. In other cases they are a non-flexible material such as a plastic or other material panel.

The carrier 60 can be waterproof. There can be a weatherproof seal between the carrier 60 and the roof 4 of the vehicle or truck that is part or separate from the carrier 60. By using drop-stitch material panels 10 and engineered bends 40 and/or 50 that are rigid when inflated, the carrier 60 is rigid enough to carry items on top of the vehicle roof 4, but it can be deflated, rolled, and stored compactly, such as in a corner of a garage.

The inflatable carrier 60 provides an easy-to-assemble, easy-to-use, easy-to-store, easy-to-ship, and/or easy-to-move, inflatable rigid sleeping and/or storage platform that can be used on trucks, vans, SUVs, RVs, and automobiles. Drop-stitch material panels 10 and engineered bends 40 and/or 50, rigid when inflated, can make the carrier 60 stiff enough to support people or cargo. The carrier 60 keeps cargo, a (e.g., sleeping) person and/or a pet off the ground. The inflatable carrier makes cargo space on vehicles for different useful purposes.

The inflatable carrier 60 is designed to be attached to a vehicle 6 and/or roof 4 with an attachment structure 9 such as shown in Figs. 5, 6 and 8. Structure 9 may include anchors, attachments, intermediary structure, clips, bands, rope, line, tape, strips, straps and/or magnetic flaps on the exterior of the carrier 60. Structure 9 for attaching the carrier may include anchors, magnets, straps, clamps, and/or spaced-apart, elongated legs extending from the bottom of the carrier to attach it to and above the roof 4 so the user can store items in space 74 of the carrier 60.

The base 62 or a bottom surface 8 of the base may include the structure 9 for attaching the base 62 to the vehicle 6 or roof 4. The structure 9 for attaching may be or include straps extending above and/or over the base 62 (e.g., through space 74), through an internal space of the carrier and to the vehicle 6. The structure 9 for attaching may be attached (optionally only attached) to a rear wall 73 and a front wall 75 of the carrier and extend to the vehicle 6. The structure 9 for attaching may be or include a flat bottom surface 8 of the base 62 for attaching to a vehicle roof 4, and the flat bottom surface 8 of the base includes structure for attaching to the vehicle roof 4. Sometimes, base 62 is a solid material panel (e.g., not inflatable panel 10) or an independently inflated panel 10. For example, base 62 may be a solid, non-inflatable panel of plastic, wood, metal, alloy, fiberglass, cloth, porcelain, or another material capable of performing the mechanical requirements of base 62, such as described herein.

The carrier 60 or base 62 may be directly attached to the roof 4 (e.g., the outer topmost surface or surface under which occupants are sitting) of a vehicle (e.g., car, camper, truck, topper, SUV, RV and the like), such as directly to a top surface of the roof. Sometimes, the carrier 60 or base 62 may be indirectly attached to the roof of a vehicle through an intermediate structure such as a hardened frame or flexible buffer structure attached to the roof.

Fig. 8 is a bottom view of a carrier 60 with engineered bends 40 and/or 50. Carrier 60 includes structure 9 for attaching it to a vehicle roof 4. There may be more structure (not shown) between structure 9 and roof 4 such that carrier 60 and/or structure 9 is coupled or indirectly attached to the roof 4 and/or other parts of vehicle 6. Bottom surface 8 of carrier base 62 includes housings 88 and 90. Each housing includes a strap clamp 92 and 94. Straps 100 and 102 extend from the respective strap clamp to a mounting bar that attaches to the vehicle roof at 104 and 106. Some vehicles have permanent mounting bars, but temporary bars are available to attach to a vehicle. A second set of straps 108 and 110 extend between the other mounting bars. Each strap 108 and 110 is tightened around the mounting bar on the right side of Fig. 8 where each can be tied off. Housings 88 and 90 have respective doors 116 and 118, which fold over the housing to protect clamps 92 and 94.

Clips such as D-rings 120, 122, 124 and 126 can mount on the outside of base 62. Short straps also may connect the D-rings to the vehicle 6. Adhesive pads such as pad 128 may attach the D-rings to base 62 or they may be sewn to non-inflated material of the base.

Carrier 60 may use or include other structure for attaching it to a vehicle 6 such as fasteners, straps, suction cups, clips, Velcro^{®}, zippers, magnets or similar structure may connect carrier 60 to vehicle 6 and/or vehicle roof 4.

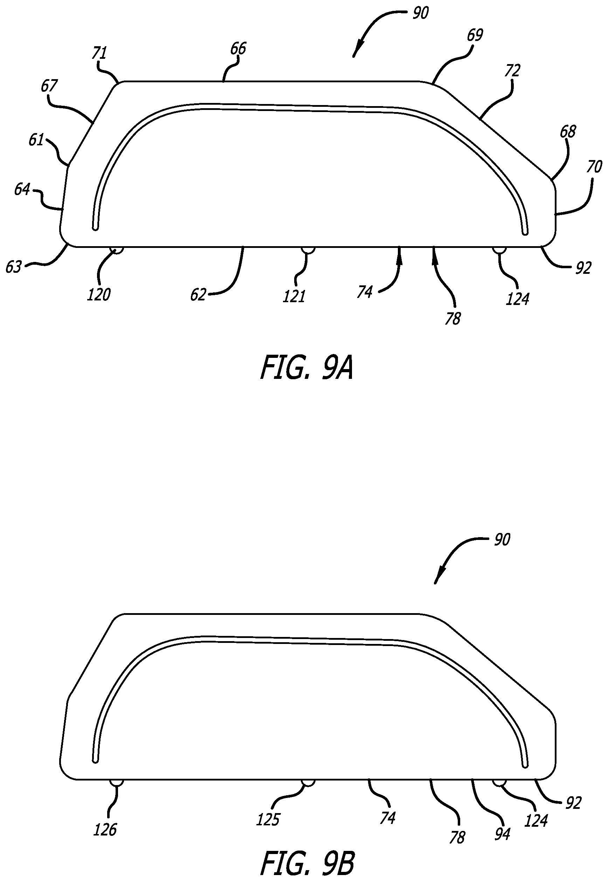

Fig. 9A is a side view showing a cargo carrier 90 with engineered bends 40 and/or 50 and a closed window 94 in a sidewall 82. Fig. 9B is a side view showing a cargo carrier 90 with engineered bends 40 and/or 50 and an open window 94 in a sidewall 82. Carrier 90 may be the same as carrier 60, except carrier 90 has also Velcro or zippers 92 on one or both sidewalls 80 and/or 82 for opening windows 94 in sidewalls 80 and 82 to expose space 74. Window 94 may be opened in an area of opening 78 to expose space 74. Zippers 92 may be zipped back to expose opening 78 and/or space 74 to the outside of carrier 60. Zippers 92 may be zipped up to close off opening 78 and/or space 74 from the outside of carrier 60.

The sidewalls 80 and 82 may have openings such as windows 94 for ventilation. The windows 94 may be non-transparent material to minimize outside light let into the carrier. Depending on the carrier's length, people may sleep in it such as when empty of cargo. The space 74 may be large enough to hold one or two people comfortably.

One or both sidewalls 80 and 82 may have windows 94 which let ventilation space 74 and/or to a person sleeping in space 74. Windows 94 or areas on the sidewalls 80 and/or 82 may include sidewall flaps of canvas or similar materials to cover openings in the sidewalls acting as windows 94 to allow air into, loading of and unloading of the space 74. Sometimes, the flaps or windows 94 may be closed or fully or partially opened with a zipper, Velcro^{®}, magnets, or another fastener.

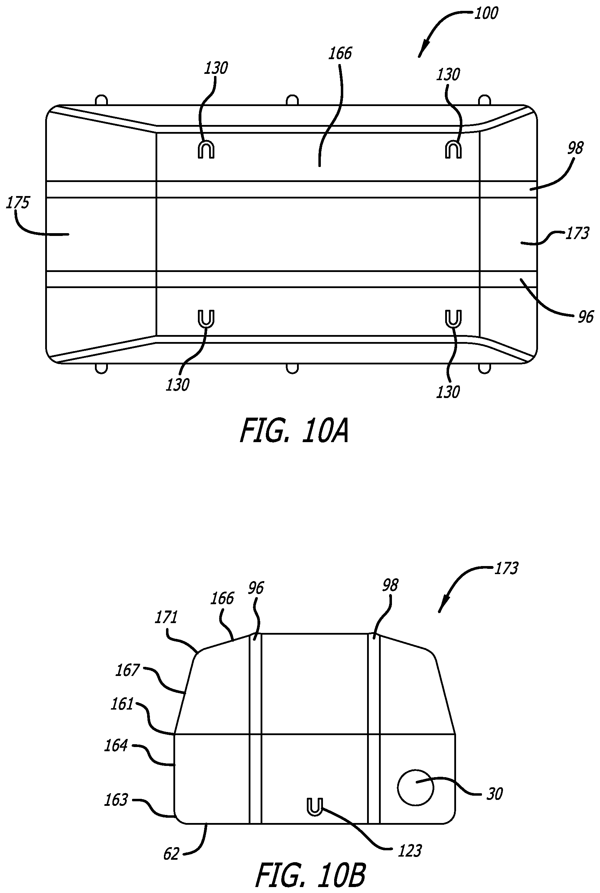

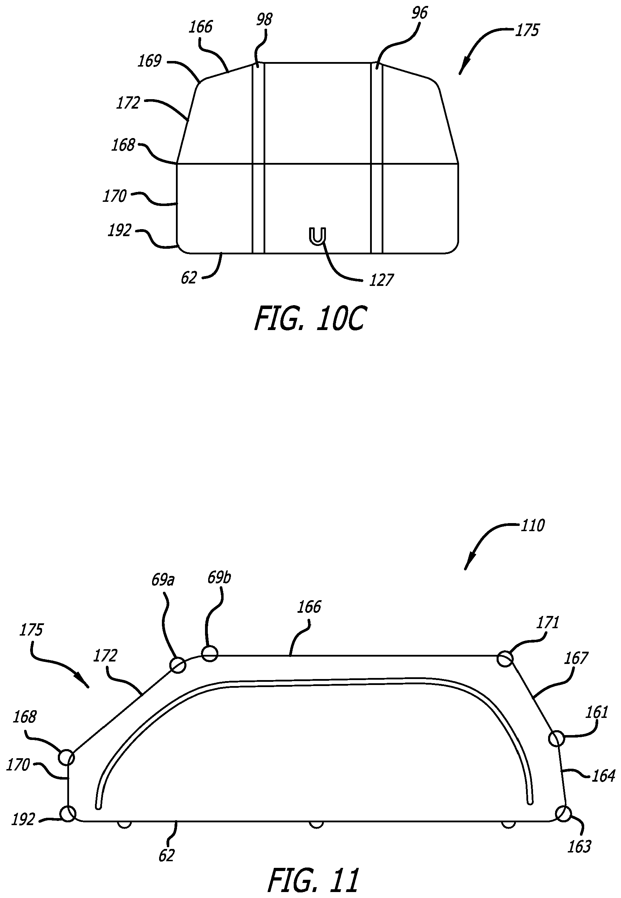

Fig. 10A is a plan view showing a cargo carrier 100 with horizontal engineered bends 40 and/or 50 and with vertical engineered bends 96 and 98. Fig. 10B is a rear view showing a cargo carrier 100 with horizontal engineered bends 40 and/or 50 and with vertical engineered bends 96 and 98. Fig. 10C is a front view showing a cargo carrier 100 with horizontal engineered bends 40 and/or 50 and with vertical engineered bends 96 and 98.

Carrier 100 may be the same as carrier 60 or 90, except carrier 100 also has vertical engineered bends 96 and 98 vertically splitting panels 10 of back wall 73, top 66 and front wall 75 from back to front into 3 panel 10 sections of back wall 173 (e.g., rear supports 164 and 167), top 166 and front wall 175 (e.g., front sections 170 and 172). Vertical bends 96 and 98 may be the same as bends 40 and/or 50 except that vertical bends 96 and 98 vertically split panels 10 of back wall 73, top 66 and front wall 75 from back to front into 3 panel 10 sections. Vertical splitting of panels 10 may be as shown in Figs. 4A-4B where there are two bends 40 and/or 50 in each panel 10 in a vertical direction.

Sometimes, vertical bends 96 and 98 do not intersect with and are not air open with any of horizontal bends 63, 71, 69 and/or 65. In other cases, vertical bends 96 and 98 may intersect with and to air open with one or more of horizontal bends 63, 71, 69 and/or 65. Vertical bends 96 and 98 may intersect with and be air open with all of horizontal bends 63, 71, 69 and 65. Intersected horizontal bends are shown as bends 163, 171, 169 and 165.

Clips such as D-rings 120, 121, 122, 123, 124, 125, 126 and 127 can mount on the outside of base 62. Short straps also may connect the D-rings to the vehicle 6. Adhesive pads such as pad 128 attach the D-rings to base 62. Adhesive pads such as pad 128 may attach the D-rings to base 62 or they may be sewn to non-inflated material of the base.

Rings 130 may be mounted on top 66 of carrier 60. The rings 130 allow storage and conveyance on the carrier's top of more items such as camping gear and sporting equipment like surfboards. Adhesive pads such as pad 128 may attach the Rings 130 to top 66 or they may be sewn to non-inflated material of the top. The carrier when deflated may be small enough for the vehicle to carry in a truck bed or back of a wagon, SUV, or the like.

Fig. 11 is a side view showing a cargo carrier 110 with two horizontal engineered bends 69a and 69b between top 166 and front wall 175 (e.g., front section 172). Carrier 110 might have vertical engineered bends 96 and 98, but is shown with them. Carrier 110 may be the same as carrier 60, 90 or 100, except carrier 110 also has two horizontal engineered bends 69a and 69b horizontally splitting panel 10 of top 166 or front wall 175 (e.g., front section 172) into 2 panel 10 sections. Bends 69a and 69b may be the same as bends 40 and/or 50 except that bends 96 and 98 are two bends 40 and/or 50 in panel 10 of top 166 or front wall 175 (e.g., front section 172).

### Description of Methods

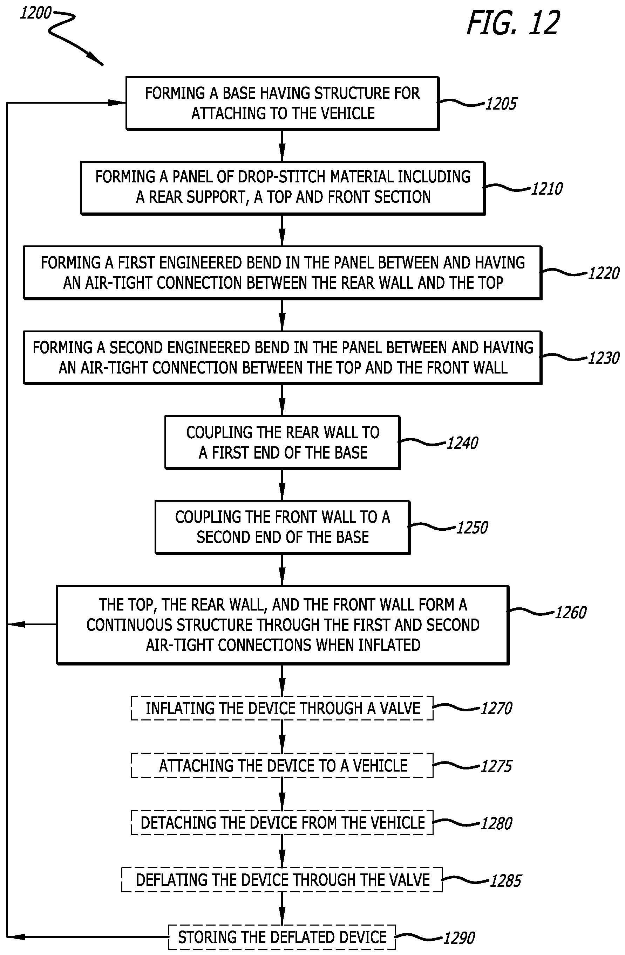

Fig. 12 is a flow diagram showing a process 1200 for forming an inflatable device for attaching to a vehicle roof. Fig. 12 shows processes 1200 having steps 1205-1290 for fabrication, assembling or manufacturing of a carrier device 60, 90, 100 or 110 having engineered bends. The process starts with forming a base to step 1205 and ends with the completed carrier (prior to or after an initial inflation) at step 1290. Process 1200 includes only major process steps. Various process steps that are not mentioned (e.g., surface preparation, bonding surfaces, sealing surfaces, adding attachment structures, etc.) may be performed before, between, after, and during the steps of process 1200.

Step 1205 is forming a base having structure for attaching to the vehicle 6. Step 1205 may be forming a base such as base 62 which may be or include a panel of drop-stitch material. In other cases, step 1205 may be forming a base such as base 62 which does not include a panel of drop-stitch material, such as a non-inflatable panel of plastic, wood, metal, alloy, fiberglass, cloth, porcelain, or another material capable of performing the mechanical requirements of base 62. Step 1205 may include forming a base of a carrier as noted herein.

Next, step 1210 is forming a panel 10 of drop-stitch material 12 including a back wall 73, top 66 and front wall 75. At step 1210 each of the back wall 73, top 66 and front wall 75 may be or include part of a single panel 10 of drop-stitch material. In cases where base 62 is a drop-stitch material, step 1210 may includes forming the base 62 of the same panel 10 of drop-stitch material that forms the back wall 73, top 66 and front wall 75. In other cases, base 62 is a separate piece of drop-stitch material. Step 1210 may include forming the back wall 73, top 66, front wall 75 and base 62 as noted herein.

Next, step 1220 is forming a first engineered bend in the panel 10 between and having an air-tight connection between the rear wall 73 and the top 66. Step 1220 may include forming the engineering bend 40 and/or 50 as noted herein between the back wall 73 and top 66.

Next, step 1230 is forming a second engineered bend in the panel 10 between and having an air-tight connection between the top 66 and the front wall 75. Step 1230 may include forming the engineering bend 40 and/or 50 as noted herein between the front wall 75 and top 66.

In cases where base 62 is a drop-stitch material, step 1220 or 1230 may include forming a third engineered bend 40 or 50 in the panel 10 between and having an air-tight connection between the back wall 73 and base 62. In cases where base 62 is a drop-stitch material, step 1220 or 1230 may include forming a fourth engineered bend in the panel 10 between and having an air-tight connection between the front wall 75 and base 62.

Next, step 1240 is coupling the rear wall 73 to a first (e.g., back or rear) end of the base 62. Coupling at step 1240 may be or include attaching, bonding, laminating, adhering, taping or otherwise permanently connecting the rear wall 73 to the base 62. In cases where base 62 is a drop-stitch material, step 1240 may include forming an engineering bend 40 or 50 having an air-tight connection between the base 62 and the rear wall 73.

Next, step 1250 is coupling the front wall 75 to a second (e.g., front) end of the base 62. Coupling at step 1250 may be or include attaching, bonding, laminating, adhering, taping or otherwise permanently connecting the front wall 75 to the base 62. In cases where base 62 is a drop-stitch material, step 1250 may include forming an engineering bend 40 or 50 having an air-tight connection between the base 62 and the front wall 75.

Next, step 1260 the top, the rear wall, and the front wall form a continuous structure through the first and second air-tight connections when inflated. For example, it is possible to inflate all of the top, the rear wall, and the front wall using a single valve 30 in only one of the top, the rear wall, and the front wall.

In cases where base 62 is a drop-stitch material, step 1260 may include the base, the top, the rear wall, and the front wall form a continuous structure such as carrier 60, 90, 100 and/or 110 through the first, second and (third and/or fourth) air-tight connections when inflated. For example, it is possible to inflate all of the base, top, the rear wall, and the front wall using a single valve 30 in only one of the base, top, the rear wall, and the front wall.

Next, optional step 1270 is inflating the device such as carrier 60, 90, 100 and/or 110 of step 1260 through a valve 30 in one of the rear wall, the top or the front wall. In cases where base 62 is a drop-stitch material, step 1270 may include inflating through a valve 30 only in base 62.

Next, optional step 1275 is attaching the device such as inflated carrier 60, 90, 100 and/or 110 of step 1270 to a vehicle 6. In some cases, the device such as inflated carrier 60, 90, 100 and/or 110 is attached to the vehicle 6 first as in step 1275, then inflated as in step 1270.

Next, optional step 1280 is detaching the device such as inflated carrier 60, 90, 100 and/or 110 of step 1270 from the vehicle 6. Next, optional step 1285 is deflating the device such as carrier 60, 90, 100 and/or 110 of step 1280 through a valve 30 in one of the rear wall, the top or the front wall. In cases where base 62 is a drop-stitch material, step 1280 may include inflating through a valve 30 only in base 62.

In some cases, the device such as inflated carrier 60, 90, 100 and/or 110 is deflated first as in step 1285, then detached from the vehicle 6 as in step 1280.

At step 1290 the device, such as deflated carrier 60, 90, 100 and/or 110 is stored. Storing at step 1290 may include folding the deflated device into a much smaller volume device, such as only including the space of the base, top, rear wall, front wall and sides. It may be stored in a shed, a garage or the like.

This application may use the terms "drop stitch", "drop-stitch" or "dropstitch" to describe the same drop-stitch material 12.

### Preferred embodiments

Preferred embodiments (Examples) of the technologies herein include an inflatable cargo carrier device for attaching to a vehicle roof, the device comprising: a base; a top including a top panel of drop-stitch material; a rear support including a rear support panel of drop-stitch material connecting the base and the top panel; a front section including a front section panel of drop-stitch material connecting the base and the top panel; characterized in having a first engineered bend between and having an air-tight connection between the rear support panel and the top panel; a second engineered bend between and having an air-tight connection between the top panel and the front section panel; wherein the top panel, the rear support panel, and the front section panel form a continuous structure when inflated; and wherein the base includes structure for attaching to the vehicle roof.

The examples include wherein the drop-stitch material includes a front surface, a back surface, and threads of material attached to and extending between the front and back surfaces, wherein the threads each having equal length so the front or back surfaces are parallel to each other when inflated.

The examples include wherein each of the first and second engineered bends includes an air-tight communication to simultaneously inflate or deflate the rear support, the top and the front section.

The examples include wherein each air-tight communication includes a gas open space between two adjacent panels allowing simultaneous inflation or deflation of the top, the rear support, and the front section through the first and second engineered bends.

The examples include wherein each engineered bend includes: an engineered pinch on a bottom surface of the engineered bend which causes the engineered bend to bend to an angle A1 which is less than 180 degrees, and an engineered bulge 44 on a top surface 46 of the engineered bend 40.

The examples include wherein the pinch includes a partial fold of the bottom surface formed by a tape on and pinching together the bottom surface; and wherein the bulge includes a bump on the top surface because of the tape on and pinching together the bottom surface.

The examples include wherein the tape is a flexible, durable tape made from polyvinyl chloride (PVC) that is coated with adhesive.

The examples include wherein the base includes structure for attaching the base to the vehicle roof, and wherein the structure for attaching includes one of: straps extending above the base, through an internal space of the carrier and to the vehicle; structure attaching a rear wall and a front wall of the carrier to the vehicle; or a flat bottom surface of the base having structure for attaching to the vehicle roof.

The examples include further comprising a valve through one of the bases, the top, the rear support, or the front section that allows air to pass through the valve to simultaneously inflate at least three of the bases, the rear support, the top and the front section.

The examples include wherein the rear wall has two rear supports joined at a rear engineered bend having an air-tight connection between the two rear supports; and wherein the front wall has two front sections joined at a front engineered bend having an air-tight connection between the two front sections.

The examples include wherein the first and second engineered bends each have fluid-tight and the air-tight connections between pairs of the rear support panel, the top panel and the front section panel.

Examples of the technologies herein include an inflatable cargo carrier device for attaching to a vehicle roof, the device comprising: a base for attaching to the vehicle roof; a top including a top panel of drop-stitch material; a rear support including a rear support panel of drop-stitch material, the rear support connecting the base and the top panel; a front section including a front section panel of drop-stitch material, the front section connecting the base and the top panel; a first engineered bend between and having an air-tight connection between the rear support panel and the top panel; a second engineered bend between and having an air-tight connection between the top panel and the front section panel; wherein the top panel, the rear support panel, and the front section panel form a continuous structure when inflated.

The examples include wherein each of the first and second engineered bends includes an air-tight communication to simultaneously inflate or deflate at least two of the bases, the rear support, the top and the front section.

The examples include wherein each air-tight communication includes a gas open space between two adjacent panels allowing simultaneous inflation or deflation of the at least three of the bases, the top, the rear support, and the front section.

The examples include wherein each of the first and second engineered bends includes: an engineered pinch on a bottom surface of the engineered bend which causes the engineered bend to bend to an angle A1 which is less than 180 degrees, wherein the pinch includes a partial fold of the bottom surface formed by a tape on and pinching together the bottom surface.

The examples include wherein each of the first and second engineered bends includes: an engineered bulge on a top surface of the engineered bend 40, wherein the bulge includes a bump on the top surface because of the tape on and pinching together the bottom surface.

Examples of the technologies herein include an inflatable device for attaching to a vehicle roof, the device comprising: a base having structure for attaching to the vehicle; a top including a drop-stitch material; a rear support including a drop-stitch material connecting the base and the top; a front section including a drop-stitch material connecting the base and the top; at least two engineered bends between and having fluid-tight and air-tight connections between pairs of the rear support, the top and the front section; and wherein the top, the rear support, and the front section form a continuous structure when inflated.

The examples include wherein the drop-stitch material has an outer surface and a spaced inner surface connected by fine, flexible plastic thread and wherein the drop-stitch material of the top, the rear support, and the front section form one connected piece with the space between the outer surface and inner surface being continuous so inflating at any of the top, the rear support, and the front section inflates all of the top, the rear support, and the front section.

The examples include further comprising sidewalls attached to the base, the top, the rear support, and the front section, the sidewalls aligned with each other to form an internal space when the top, the rear support, and the front section are inflated.

The examples include wherein the structure for attaching comprises at least one of: anchors, attachments, intermediary structure, clips, bands, rope, line, tape, strips, straps, or magnetic flaps on the exterior of the inflatable device.

The technologies herein include a method of manufacturing an inflatable device for attaching to a vehicle roof, the method comprising: forming a base having structure for attaching to the vehicle; forming a panel of drop-stitch material including a back wall, top and front wall; characterized in forming a first engineered bend in the panel between and having a first air-tight connection between the rear wall and the top; forming a second engineered bend in the panel between and having a second air-tight connection between the top and the front wall; and coupling the rear wall to a first end of the base; coupling the front wall to a second end of the base; wherein the top, the rear wall, and the front wall form a continuous structure through the first and second air-tight connections when inflated.

The examples include further comprising: inflating the device through a valve in one of the rear wall, the top or the front wall; then attaching the device to a vehicle.

The examples include further comprising: detaching the device from the vehicle; then deflating the device through the valve.

### Closing Comments

Throughout this description, the embodiments and examples shown should be considered as exemplars, rather than limitations on the apparatus and procedures disclosed or claimed. Although many examples presented in this application involve specific combinations of method acts or system elements, those elements may be combined in other ways to accomplish the same objectives. Regarding flowcharts, more and fewer steps may be taken, and the steps as shown may be combined or further refined to achieve the methods described. Acts, elements, and features discussed only in connection with one embodiment are not intended to be excluded from a similar role in other embodiments.

As used herein, "plurality" means two or more. As used herein, a "set" of items may include one or more of such items. As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases regarding claims. Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. As used herein, "and/or" means that the listed items are alternatives, but the alternatives also include any combination of one or more of the listed items.

## Claims

1. An inflatable cargo carrier device for attaching to a vehicle roof, the device comprising:
a base;
a top including a top panel of drop-stitch material;
a rear support including a rear support panel of drop-stitch material connecting the base and the top panel;
a front section including a front section panel of drop-stitch material connecting the base and the top panel;
**characterized in** having:
a first engineered bend between and having an air-tight connection between the rear support panel and the top panel; and
a second engineered bend between and having an air-tight connection between the top panel and the front section panel;
wherein the top panel, the rear support panel, and the front section panel form a continuous structure when inflated; and
wherein the base includes structure for attaching to the vehicle roof.

2. The inflatable cargo carrier device of claim 1, wherein the drop-stitch material includes a front surface, a back surface, and threads of material attached to and extending between the front and back surfaces, wherein the threads each having equal length so the front or back surfaces are parallel to each other when inflated.

3. The inflatable cargo carrier device of any of the preceding claims, wherein each of the first and second engineered bends includes an air-tight communication to simultaneously inflate or deflate the rear support, the top and the front section.

4. The inflatable cargo carrier device of claim 3, wherein each air-tight communication includes a gas open space between two adjacent panels allowing simultaneous inflation or deflation of the top, the rear support, and the front section through the first and second engineered bends.

5. The inflatable cargo carrier device of any of the preceding claims, wherein each engineered bend includes:
an engineered pinch on a bottom surface of the engineered bend which causes the engineered bend to bend to an angle A1 which is less than 180 degrees, and
an engineered bulge 44 on a top surface 46 of the engineered bend 40.

6. The inflatable cargo carrier device of claim 5, wherein the pinch includes a partial fold of the bottom surface formed by a tape on and pinching together the bottom surface; and wherein the bulge includes a bump on the top surface because of the tape on and pinching together the bottom surface.

7. The inflatable cargo carrier device of any of the preceding claims, wherein the tape is a flexible, durable tape made from polyvinyl chloride (PVC) that is coated with adhesive.

8. The inflatable cargo carrier device of any of the preceding claims, wherein the base includes structure for attaching the base to the vehicle roof, and wherein the structure for attaching includes one of:
straps extending above the base, through an internal space of the carrier and to the vehicle;
structure attaching a rear wall and a front wall of the carrier to the vehicle; or
a flat bottom surface of the base having structure for attaching to the vehicle roof.

9. The inflatable cargo carrier device of any of the preceding claims, further comprising a valve through one of the bases, the top, the rear support, or the front section that allows air to pass through the valve to simultaneously inflate at least three of the bases, the rear support, the top and the front section.

10. The inflatable cargo carrier device of any of the preceding claims, wherein the rear wall has two rear supports joined at a rear engineered bend having an air-tight connection between the two rear supports; and wherein the front wall has two front sections joined at a front engineered bend having an air-tight connection between the two front sections.

11. The inflatable cargo carrier device of any of the preceding claims, wherein the first and second engineered bends each have
fluid-tight and the air-tight connections between pairs of the rear support panel, the top panel and the front section panel.

12. The inflatable cargo carrier device of any of the preceding claims, wherein the drop-stitch material has an outer surface and a spaced inner surface connected by fine, flexible plastic thread and wherein the drop-stitch material of the top, the rear support, and the front section form one connected piece with the space between the outer surface and inner surface being continuous so inflating at any of the top, the rear support, and the front section inflates all of the top, the rear support, and the front section.

13. The inflatable cargo carrier device of any of the preceding claims further comprising sidewalls attached to the base, the top, the rear support, and the front section, the sidewalls aligned with each other to form an internal space when the top, the rear support, and the front section are inflated.

14. The inflatable cargo carrier device of any of the preceding claims, wherein the structure for attaching comprises at least one of: anchors, attachments, intermediary structure, clips, bands, rope, line, tape, strips, straps, or magnetic flaps on the exterior of the inflatable device.

15. A method of manufacturing an inflatable device for attaching to a vehicle roof, the method comprising:
forming a base having structure for attaching to the vehicle;
forming a panel of drop-stitch material including a back wall, top and front wall;
**characterized in**:
forming a first engineered bend in the panel between and having a first air-tight connection between the rear wall and the top;
forming a second engineered bend in the panel between and having a second air-tight connection between the top and the front wall; and
coupling the rear wall to a first end of the base; and
coupling the front wall to a second end of the base;
wherein the top, the rear wall, and the front wall form a continuous structure through the first and second air-tight connections when inflated.
